# EUROPÄISCHE PATENTSCHRIFT

(11) **EP 1 963 879 B1**
(45) Veröffentlichungstag und Bekanntmachung des Hinweises auf die Patenterteilung: **25.02.2015**
(21) Anmeldenummer: 06807822.9
(22) Anmeldetag: 16.11.2006
(51) Int. Cl.: G01S 7/41, G01S 13/93, G01S 13/72

(54) **VERFAHREN ZUR BEWERTUNG VON MESSWERTEN**
METHOD FOR ASSESSING MEASURED VALUES
PROCEDE POUR L'EVALUATION DE VALEURS DE MESURE

(30) Priorität: 15.12.2005 DE 102005059904
(43) Veröffentlichungstag der Anmeldung: 03.09.2008
(73) Patentinhaber: ROBERT BOSCH GMBH, 70442 Stuttgart (DE)
(72) Erfinder: JORDAN, Ruediger, 70192 Stuttgart (DE)
(86) Internationale Anmeldenummer: PCT/EP2006/068568
(87) Internationale Veröffentlichungsnummer: WO 2007/071504

(56) Entgegenhaltungen:
- GB-A- 2 263 036
- US-A- 5 341 142
- LINGMIN MENG ET AL: "Radar detection improvement by integration of multi-object tracking" INFORMATION FUSION, 2002. PROCEEDINGS OF THE FIFTH INTERNATIONAL CONFERENCE ON JULY 8-11, 2002, PISCATAWAY, NJ, USA,IEEE, Bd. 2, 8. Juli 2002 (2002-07-08), Seiten 1249-1255, XP010594336 ISBN: 0-9721844-1-4
- LERRO ET AL.: "Interacting Multiple Model Tracking with Target Amplitude Feature" IEEE TRANS. ON AEROSPACE AND ELECTRONIC SYSTEMS, Bd. 29, Nr. 2, 1. April 1993 (1993-04-01), Seiten 494-508, XP002420618 PISCATAWAY, NJ, US

## Beschreibung

Die Erfindung betrifft ein Verfahren zur Bewertung von Messwerten, eine Einrichtung, ein Computerprogramm, und ein Computerprogrammprodukt.

### Stand der Technik

Sicherheitsfunktionen für Fahrzeuge benötigen hochzuverlässige Informationen über Objekte, die sich im Umfeld der Fahrzeuge befinden. Da bei diesen Sicherheitsfunktionen niedrige Fehlerauslöseraten gefordert sind, sind Systeme zur Bereitstellung der Sicherheitsfunktionen mit aufwendigen und teuren Sensoren realisiert, die eine geringe Fehlermessrate aufweisen. Da unter anderem auch Objekte, die von dem Sensor denselben Abstand aufweisen und sich mit gleicher Geschwindigkeit bewegen, getrennt werden müssen, werden hierzu winkeltrennfähige Sensoren eingesetzt, wobei es sich bspw. um mechanische Scanner oder um Scanner, die nach dem Prinzip des "Digital Beam Forming" (digitale Strahlformung) arbeiten, handelt.

Derartige Sensoren sind insbesondere dann notwendig, wenn auf Standziele reagiert werden soll, da der einzelne Sensor in diesem Fall sehr viele Standziele erfasst, die nur über den Winkel voneinander getrennt werden können. Aus LERRO ET AL.: "Interacting Multiple Model Tracking with Target Amplitude Feature", IEEE TRANS. ON AEROSPACE AND ELECTRONIC SYSTEMS, Bd. 29, Nr. 2, 1. April 1993 (1993-04-01), Seiten 494-508, XP002420618, bzw. aus LINGMIN MENG ET AL: "Radar detection improvement by integration of multi-object tracking", INFORMATION FUSION, 2002. PROCEEDINGS OF THE FIFTH INTERNATIONAL CONFERENCE ON JULY 8-11, 2002, PISCATAWAY, NJ, USA,IEEE, Bd. 2, 8. Juli 2002 (2002-07-08), Seiten 1249-1255, XP010594336, sind Verfahren zur Bewertung von Sensormesswerten bekannt.

Vor diesem Hintergrund wird ein Verfahren mit den Merkmalen des Patentanspruchs 1, eine Einrichtung mit den Merkmalen des Patentanspruchs 9, ein Computerprogramm mit den Merkmalen des Patentanspruchs 12 und ein Computerprogrammprodukt mit den Merkmalen des Patentanspruchs 13 vorgestellt.

### Vorteile der Erfindung

Bei dem erfindungsgemäßen Verfahren zur Bewertung von Messwerten, die von einem Sensor erfasst werden, wird eine Streuung der Messwerte berücksichtigt, um eine Interferenz-Situation zu klassifizieren.

Die erfindungsgemäße Einrichtung ist dazu ausgebildet, ein erfindungsgemäßes Verfahren durchzuführen.

Die Erfindung betrifft außerdem ein Computerprogramm mit Programmcodemitteln, um alle Schritte eines erfindungsgemäßen Verfahrens durchzuführen, wenn das Computerprogramm auf einem Computer oder einer entsprechenden Recheneinheit, insbesondere in einer erfindungsgemäßen Einrichtung, ausgeführt wird.

Des weiteren betrifft die Erfindung ein Computerprogrammprodukt mit Programmcodemitteln, die auf einem computerlesbaren Datenträger gespeichert sind, um alle Schritte eines erfindungsgemäßen Verfahrens durchzuführen, wenn das Computerprogramm auf einem Computer oder einer entsprechenden Recheneinheit, insbesondere in einer erfindungsgemäßen Einrichtung, ausgeführt wird.

Weitere vorteilhafte Ausgestaltungen der Erfindung ergeben sich aus den Unteransprüchen.

Mit der Erfindung ist es nunmehr möglich, auch mit einem nicht-winkeltrennfähigen Sensor eine derart hohe Objekt-Zuverlässigkeit bei Standzielen, also bei Objekten, die zu dem Sensor denselben Abstand aufweisen, zu erreichen, dass auf Grundlage dessen eine Sicherheitsfunktion unterstützt und somit in angemessener Weise realisiert werden kann. Fehlerauslösungen auf falsch gemessene oder falsch erfasste Objekte können nunmehr vermieden werden. Ein hoher Nutzen bei einer winkelgetrennten Erkennung von realen Objekten ist gegeben.

Mit dem erfindungsgemäßen Verfahren können zuverlässig Interferenz-Situationen klassifiziert werden. Objekte, die nicht von Interferenz betroffen sind, was durch das Verfahren nachweisbar ist, können nunmehr als zuverlässig klassifiziert oder eingestuft werden. Von Interferenz betroffene Objekte können dagegen als unzuverlässig gekennzeichnet werden. Somit kann eine fehlerhafte Auslösung auf derartige unzuverlässige Objekte von der Sicherheitsfunktion verhindert werden.

In einem Objekt- und/oder Messmodell wird zur Realisierung des Verfahrens eine zu erwartende Streuung hinterlegt, die im wesentlichen von einer Breite mindestens eines durch den Sensor zu erfassenden Objekts sowie einer Messwertgenauigkeit und Schätzgenauigkeit eines Tracking-Filters abhängen kann. Der zur Ortung und/oder Zuordnung vorgesehene Tracking-Filter ist als mögliche Komponente der erfindungsgemäßen Einrichtung dazu ausgebildet, Bewegungen des mindestens einen Objekts und/oder Reflexwanderungen an dem mindestens einen Objekt zu verfolgen. Liegt eine Streuung der Messwerte höher als auf Grundlage des Objekt- und/oder Messmodells erwartet, kommt es zu niedrigen Messwert-Assoziationswahrscheinlichkeiten. Bei Realisierung der Erfindung kann somit der Umstand genutzt werden, dass es in Interferenz-Situationen zu einer erhöhten Streuung der Messwerte kommt. Zur Bewertung können bzgl. einer Höhe der Streuung der Messwerte und/oder einer Größe der Messwert-Assoziationswahrscheinlichkeiten Schwellenwerte festgelegt werden.

Das Verfahren ist insbesondere dann erfolgreich durchführbar, wenn die Messwert-Streuung eine niedrige zeitliche Korrelation aufweist, wie sie bspw. bei weißem, gauss'schem Rauschen gegeben ist. Hiervon kann jedoch ausgegangen werden, da eine große Anzahl von Zufallsgrößen insbesondere bei Realisierung des Verfahrens durch die Einrichtung berücksichtigt werden.

Interferenzen, die bei einer Erfassung von mindestens Objekten durch den Sensor auftreten, ergeben bei einer Auswertung der Messwerte große, schwach korrelierte Messwert-Streuungen. Demnach wird bei Durchführung des Verfahrens berücksichtigt, dass sich vorzugsweise Spektren, wie Radarspektren, stehender Objekte oder Ziele, die zu dem Sensor denselben Abstand aufweisen, jedoch unter unterschiedlichen Winkeln zu dem Sensor angeordnet sind, überlagern.

Winkel werden üblicherweise durch Vergleich einer Amplitude und von Phasenverhältnissen über ein sog. Antennendiagramm, das mit einem entsprechenden Sensor bereitzustellen ist, geschätzt. Mit dem vorliegenden Verfahren ist es nunmehr auch möglich, mit nicht-winkeltrennfähigen Sensoren, die vergleichsweise günstig sind, zuverlässig Aussagen über mehrere Objekte zu treffen, die zu dem Sensor denselben Abstand aufweisen, jedoch unter unterschiedlichen Winkeln angeordnet sind.

Zur Bereitstellung des Objekt- und/oder Messmodells und somit zur Realisierung des vorliegenden Verfahrens können zudem weitere, nachfolgend gelistete Faktoren berücksichtigt werden. Diese Faktoren führen bei Interferenzen zu einer erhöhten Messwert-Streuung. Reale Objekte oder Hindernisse, die zu dem Sensor einen geringen Abstand aufweisen, können zuverlässig erkannt werden.
- Eine Rückstreuleistung von ausgedehnten Objekten schwankt stark über einen Ansichtswinkel.
- Bei einer Annäherung ändern sich der Ansichtswinkel und damit eine von dem mindestens einen Objekt zurückgestreute Leistung, insbesondere von Radarstrahlung.
- Bei einer nicht exakt mittigen Annäherung an mehrere Objekte ändern sich Entfernungsverhältnisse zu den Objekten unterschiedlich, somit ändert sich auch eine Phasenlage der von dem Sensor erfassten Signale.
- Eine ideale, absolut symmetrische Annährung an eine durch mehrere Objekte begrenzte Gasse ist üblicherweise sehr unwahrscheinlich.
- Winkelfehler sind umso größer, je ähnlicher eine Rückstreuleistung der Objekte ist, da ein schwach reflektierendes Objekt von einem stark reflektierenden Objekt spektral überdeckt wird.
- In einem Ansichtswinkel, der senkrecht auf das Objekt gerichtet ist, ist die Rückstreuleistung und demnach eine RCS (Radar Cross Section), ein Vergleichsmaß für Radar-Reflexion eines Objekts, oder ein Antennendiagramm des Objekts maximal.
- Bei einem Stauende bzw. bei breiten Objekten, reflektieren jene Objekte am stärksten, die unter einem kleinen Winkel relativ zu einer Bewegungsrichtung des Sensors angeordnet sind. Eine Ursache hierfür ist das Antennendiagramm der Objekte, das bei kleinen Winkeln empfindlicher ist und somit größere Messwerte liefert.
- Außerdem kommt es bei einem Stauende bei geringerer Entfernung zu weniger Interferenzen, da eine Basisbreite einer relevanten Interferenz bei mittleren Beams bzw. Strahlen kleiner wird.
- Das Antennendiagramm ist auf Sensorebene nur für einzelne, schmale Objekte gültig. Weist das Antennendiagramm Unsymmetrien und Unregelmäßigkeiten auf, so führen Amplituden- und Phasenfehler in Abhängigkeit von einem Winkel zu dem mindestens einen Objekt zu unterschiedlichen Winkelfehlern.
- Durch Unterabtastung entstehen bei der Annährung scheinbar zeitlich unkorrelierte Winkelfehler, was als sog. Mess-zu-Prädiktionsabweichung bezeichnet wird.

Vor dem Hintergrund dieser voranstehend beispielhaft genannten Faktoren wird als Interferenz-Klassifikator eine Messwert-Assoziationswahrscheinlichkeit benutzt. Diese Größe wird vorzugsweise mit der Methode des "Probabilistic Data Association Filter" (PDAF, Wahrscheinlichkeits-Daten-Assoziationsfilters) in jedem Messzyklus für jedes Objekt berechnet. Ein nachgeschalteter Tiefpassfilter glättet bevorzugt das Signal über die Zeit und kann korreliert niedrige oder hohe Messwert-Assoziationswahrscheinlichkeiten anzeigen. Ein Einsatz anderer geeigneter Filter ist auch denkbar. Liegt ein Signal für ein Objekt unter einer bestimmten Schwellenwert, so wird das Objekt als unzuverlässig gekennzeichnet.

Der LRR2 (Large Range (langreichweitiger) Radar)-Sensor der Robert Bosch GmbH ist nicht-winkeltrennfähig. Daher kommt es bei Einsatz dieses Sensors bei Standzielen häufig zu Interferenzen von Objekten, die zu dem Sensor denselben Abstand aufweisen und sich mit derselben Geschwindigkeit bewegen. Dies führt typischerweise zu einer falschen Winkelmessung. Ein Beispiel hierfür ist eine Fahrt durch zwei stehende Fahrzeuge, die eine Gasse bilden. In diesem Fall kommt es häufig vor, dass Winkel in der Mitte gemessen werden, was letztendlich zu einer Fehlerauslösung der Sicherheitsfunktion führen kann. Bei dieser Sensorklasse ist demnach eine Sicherheitsfunktion auf Standziele bislang nicht realisierbar. Mit der vorliegenden Erfindung können jedoch auch mit nicht-winkeltrennfähigen LRR2-Sensoren Interferenz-Situationen zuverlässig klassifiziert werden.

Die Erfindung ist bspw. für Sensoren in Kraftfahrzeugen zur Erfassung von Verkehrssituationen unter Bestimmung von Ort und/oder Geschwindigkeit von Objekten geeignet.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.

Die Figuren 1a bis 1d zeigen Diagramme zu einem ersten Beispiel einer Realisierung der Erfindung.

Die Figuren 2a bis 2d zeigen Diagramme zu einem zweiten Beispiel einer Realisierung der Erfindung.

Die Figuren 3a bis 3d zeigen Diagramme zu einem dritten Beispiel zur Realisierung der Erfindung.

Figur 4 zeigt ein Flussdiagramm zu einer beispielhaften Ausführungsform der Erfindung. Figur 1a zeigt ein erstes Beispiel zur Realisierung der Erfindung, wobei in diesem Fall vorgesehen ist, dass mit einem Sensor eine Annährung an ein einzelnes als Kraftfahrzeug ausgebildetes Objekt 2 erfolgt.

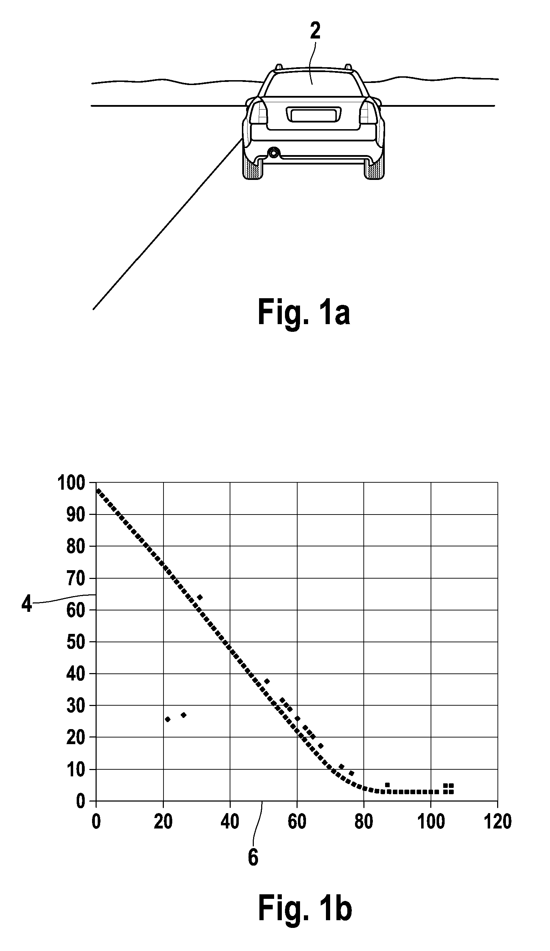

Bei dieser Annährung ergibt sich ein in Figur 1b gezeigtes Diagramm, in dem Messwerte für einen in Metern gemessenen Abstand in Abstandsintervallen dx, entlang einer Ordinate 4, über einer Anzahl von Meßzyklen, entlang einer Abszisse 6, aufgetragen sind.

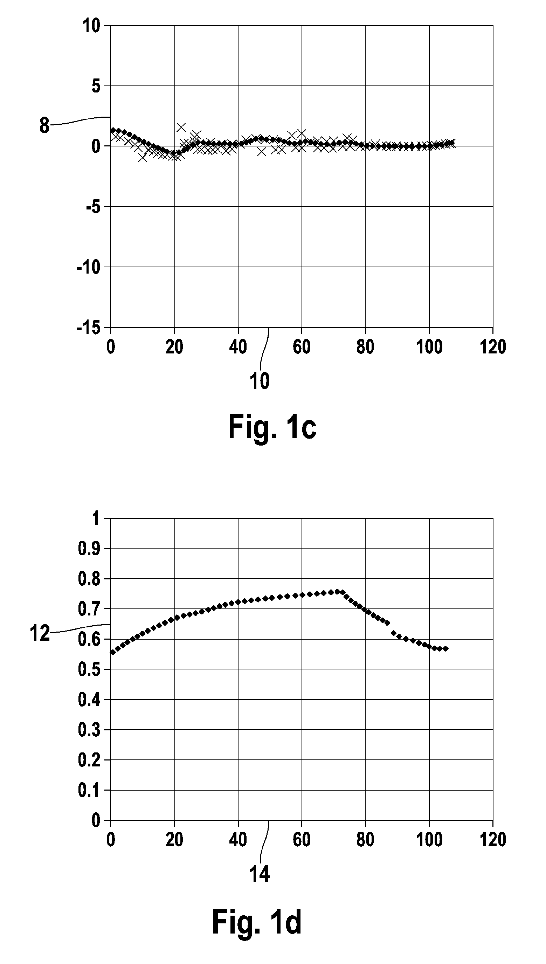

Das in Figur 1c gezeigte Diagramm zeigt eine Querversatzmesswerte und eine Objektschätzung in y-Richtung, die senkrecht zur einer Richtung der Annährung (x-Richtung) erfolgt. Hier sind entlang einer Ordinate 8 in Abstandsintervalle dy über einer Anzahl von Meßzyklen, entlang einer Abszisse 10, aufgetragen.

Das Diagramm in Figur 1d zeigt eine gefilterte Messwert-Assoziationswahrscheinlichkeit, die hier entlang einer Ordinate 12 über einer Anzahl von Meßzyklen, entlang einer Abszisse 14, aufgetragen ist. Das Objekt 2 aus Figur 1a wird in diesem Fall zuverlässig klassifiziert, da die gefilterte Messwert-Assoziationswahrscheinlichkeit über sämtliche Messzyklen einen festgelegten Schwellenwert von 0,55 nicht unterschreiten.

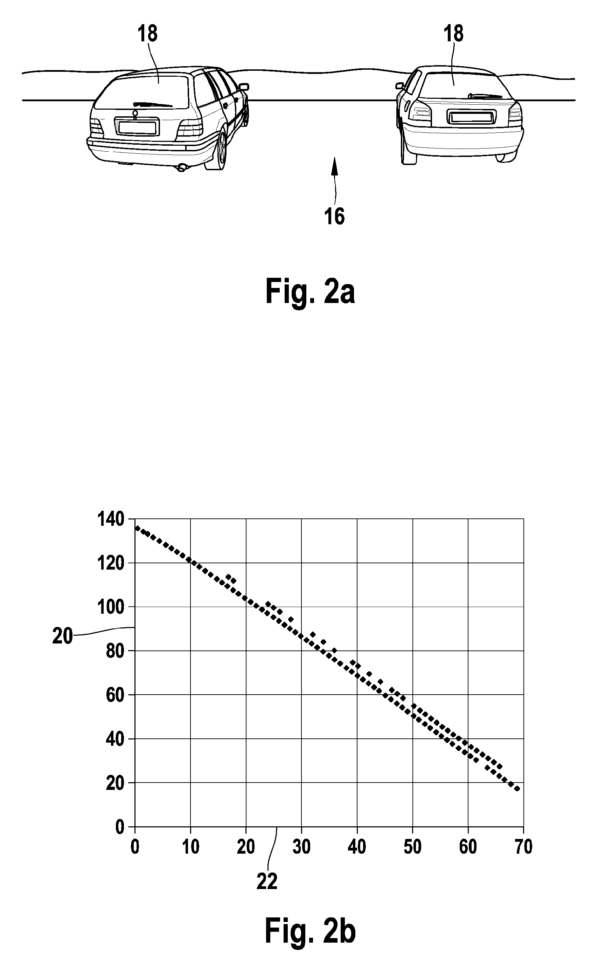

Figur 2a zeigt in schematischer Darstellung ein Beispiel zu einer mittigen Annährung auf eine Gasse 16, die durch zwei parallel zueinander angeordnete, als Fahrzeuge ausgebildete Objekte 18 begrenzt ist.

In dem Diagramm aus Figur 2b sind Abstands-Messwerte in Abstandsintervallen dx, entlang einer Ordinate 20, über einer Anzahl von Meßzyklen, entlang einer Abszisse 22, aufgetragen.

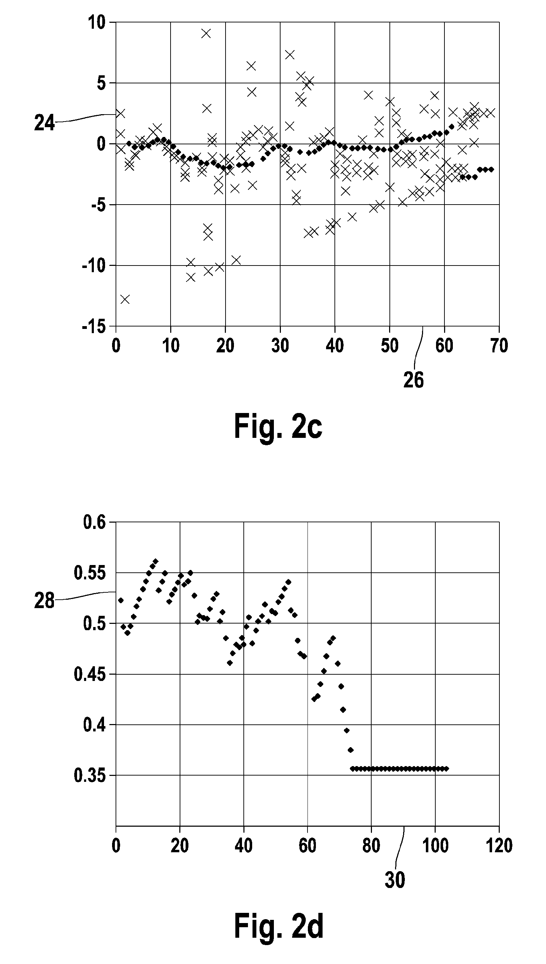

In dem Diagramm aus Figur 2c sind hierzu eine Querversatzmesswerte und eine Objektschätzung in Abstandsintervallen dy, entlang einer Ordinate 24, über einer Anzahl der Meßzyklen, entlang einer Abszisse 26, aufgetragen.

Figur 2d zeigt ein Diagramm für eine gefilterte Messwert-Assoziationswahrscheinlichkeit, die hier entlang einer Ordinate 28 über einer Anzahl von Meßzyklen, entlang einer Abszisse 30, aufgetragen ist. Da in diesem Fall Interferenzen auftreten, liegt die Messwert-Assoziationswahrscheinlichkeit hier fast vollständig unterhalb des Schwellenwerts von bspw. 0,55, demnach sind die Objekte 18 als unzuverlässig einzustufen.

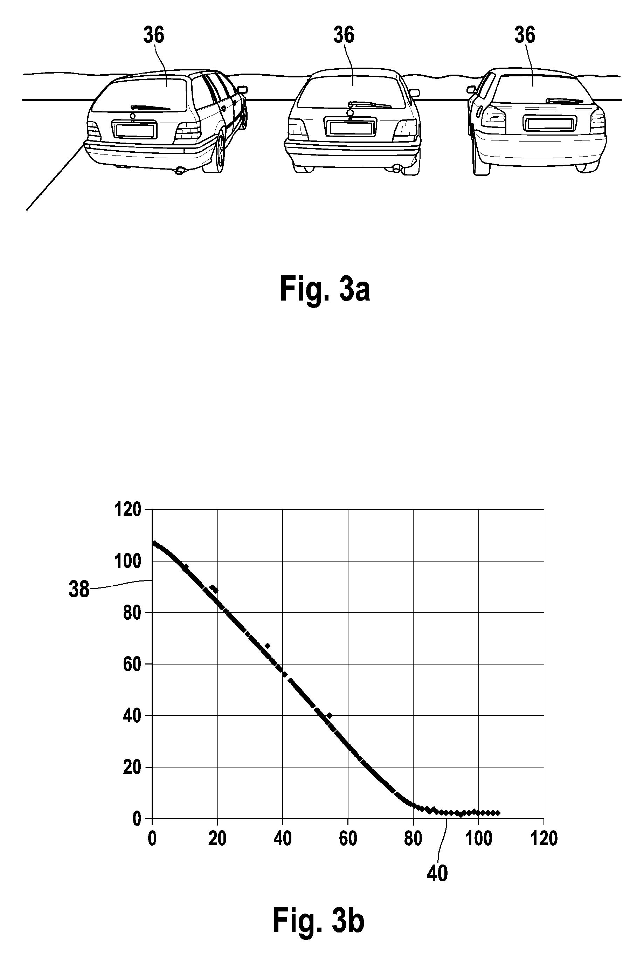

Figur 3a zeigt in schematischer Darstellung eine Annäherung auf drei parallel nebeneinander stehende Objekte 36, wobei es sich hierbei um Fahrzeuge, wie sie bspw. an einem Stauende angeordnet sind, handelt.

In dem Diagramm aus Figur 3b sind wieder Abstands-Messwerte in Abstandsintervallen dx entlang einer Ordinate 38 über einer Anzahl von Meßzyklen, entlang einer Abszisse 40, aufgetragen.

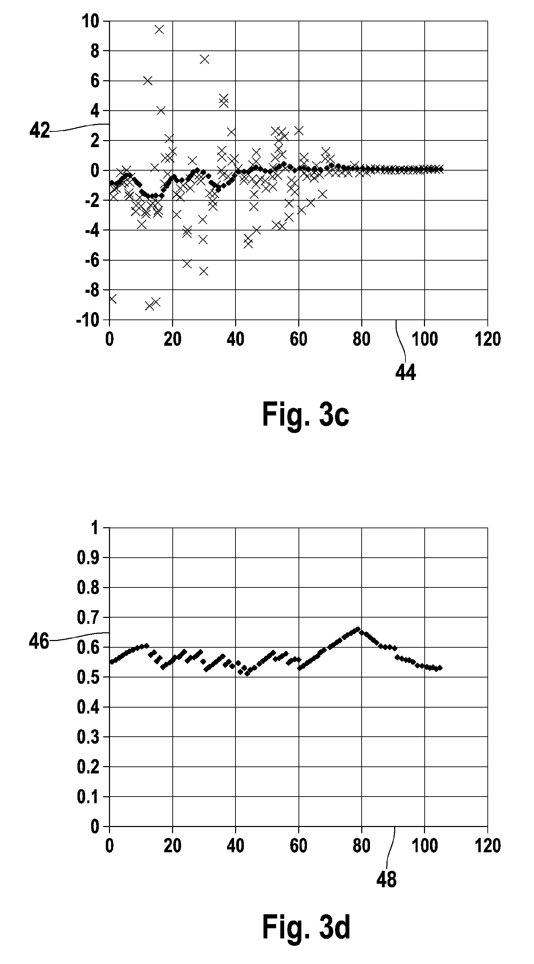

Das Diagramm aus Figur 3c zeigt außerdem eine Querversatzmesswerte und eine Objektschätzung in Abstandsintervallen dy, senkrecht zur Richtung der Annäherung, die entlang einer Ordinate 42 über einer Anzahl Meßzyklen, entlang einer Abszisse 44, aufgetragen sind.

Das Diagramm aus Figur 3d zeigt eine gefilterte Messwert-Assoziationswahrscheinlichkeit, die hier entlang einer Ordinate 46 über einer Anzahl von Meßzyklen, entlang einer Abszisse 48, aufgetragen ist. Zur Bewertung der Situation ist zu berücksichtigen, ob die gefilterte Messwert-Assoziationswahrscheinlichkeit über dem Schwellenwert von 0,55 liegt, wodurch die Messwerte als zuverlässig zu klassifizieren sind, oder ob die gefilterte Messwert-Assoziationswahrscheinlichkeit unter diesem Schwellenwert von 0,55 liegt, so dass die Messwerte als unzuverlässig zu klassifizieren sind.

Ein Stauende aus drei Fahrzeugen bzw. Objekten 36 wird als ungünstigstes Szenario eingestuft. Im vorliegenden Fall werden die drei Objekte 36 unter einer Entfernung von ca. 20 bis 25 Metern als Nicht-Interferenz und somit zuverlässig als Hindernis klassifiziert.

Das Verfahren ist auch für bewegte Objekte anwendbar, hier sind Interferenzen aber wesentlich unwahrscheinlicher. Neben der Verwendung der Messwert-Assoziationswahrscheinlichkeit sind auch andere Vorgehensweisen zur Klassifikation der Messwert-Streuung denkbar.

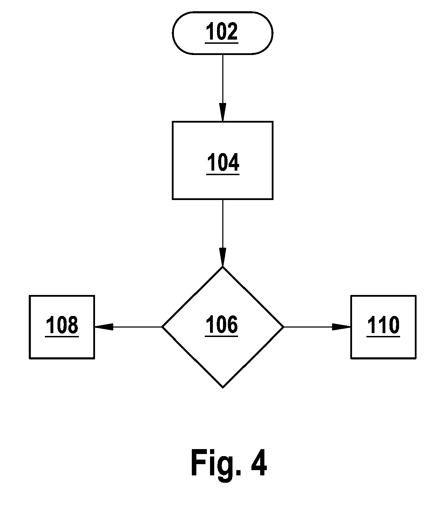

Bei einem in Figur 4 anhand eines Flussdiagramms beispielhaft dargestellten Ablauf eines erfindungsgemäßn Verfahrens ist vorgesehen, dass mindestens ein Messwert 102 in einem ersten Schritt 104 unter Berücksichtigung einer Streuung untersucht wird. Auf Grundlage dessen wird in einem zweiten Schritt 106 die Streuung des mindestens einen Messwerts 102 mit einer abgelegten für den mindestens einen Messwert 102 zu erwartenden Streuung verglichen. Dies entspricht nach entsprechender Filterung der Messwert-Streuung bzw. deren Abweichung von der erwarteten Streuung der Bereitstellung einer Messwert-Assoziationswahrscheinlichkeit.

Falls die Streuung des mindestens einen Messwerts 102 von der zu erwartenden Streuung lediglich innerhalb eines festgelegten Schwellenwerts abweicht, was einer hohen Messwert-Assoziationswahrscheinlichkeit entspricht, so wird dieser Messwert 102 gemäß einer ersten Klassifikationsmöglichkeit 108 als zuverlässig klassifiziert. Falls die Streuung des mindestens einen Messwerts 102 außerhalb des festgelegten Schwellenwerts bzgl. der zu erwartenden Streuung liegt, was einer niedrigen Messwert-Assoziationswahrscheinlichkeit entspricht, so wird dieser mindestens eine Messwert 102 gemäß einer zweiten Klassifikationsmöglichkeit 110 als unzuverlässig klassifiziert. Somit ist eine Interferenz-Situation zuverlässig klassifizierbar.

## Patentansprüche

1. Verfahren zur Bewertung von Messwerten (102), die von einem Sensor erfasst werden, wobei eine Streuung der Messwerte (102) berücksichtigt wird, um eine InterferenzSituation zu klassifizieren, wobei nachgewiesen wird, ob mindestens ein von dem Sensor zu erfassendes Objekt (2, 18, 36) von Interferenz betroffen ist oder nicht, wobei es in der Interferenz-Situationen zu einer erhöhten Streuung der Messwerte (102) kommt, wobei zur Bewertung einer Höhe der Streuung der Messwerte (102) Schwellenwerte festgelegt werden.

2. Verfahren nach Anspruch 1, bei dem die Streuung der Messwerte (102) mit einer erwarteten Streuung verglichen wird.

3. Verfahren nach Anspruch 1 oder 2, bei dem als Interferenz-Klassifikator eine Messwert-Assoziationswahrscheinlichkeit benutzt wird, wobei diese Messwert-Assoziationswahrscheinlichkeit für zumindest jeden Messzyklus berechnet wird.

4. Verfahren nach einem der voranstehenden Ansprüche, bei dem überprüft wird, ob die Messwerte (102) zuverlässig sind.

5. Verfahren nach einem der voranstehenden Ansprüche zur Klassifikation einer Interferenz-Situation für mindestens ein Objekt (2,18, 36), bei dem von dem Sensor Signale von dem mindestens einen Objekt (2, 18, 36) empfangen werden.

6. Verfahren nach Anspruch 5, bei dem überprüft wird, ob mindestens zwei Objekte (2, 18, 36) getrennt erfasst werden.

7. Verfahren nach einem der Ansprüche 5 oder 6, das für mindestens zwei Objekte (2, 18,36), die zu dem Sensor denselben Abstand aufweisen, durchgeführt wird.

8. Verfahren nach einem der voranstehenden Ansprüche, mit dem eine Sicherheitsfunktion unterstützt wird.

9. Einrichtung, die eine Recheneinheit aufweist und zur Durchführung eines Verfahrens nach einem der voranstehenden Ansprüche ausgebildet ist.

10. Einrichtung nach Anspruch 9, die einen Tiefpassfilter aufweist.

11. Einrichtung nach Anspruch 9 oder 10, die mindestens einen Sensor aufweist.

12. Computerprogramm mit Programmcodemitteln, um alle Schritte eines Verfahrens nach einem der Ansprüche 1 bis 8 durchzuführen, wenn das Computerprogramm auf einem Computer oder einer entsprechenden Recheneinheit, insbesondere in einer Einrichtung nach einem der Ansprüche 9 bis 11, ausgeführt wird.

13. Computerprogrammprodukt mit Programmcodemitteln, die auf einem computerlesbaren Datenträger gespeichert sind, um alle Schritte eines Verfahrens nach einem der Ansprüche 1 bis 8 durchzuführen, wenn das Computerprogramm auf einem Computer oder einer entsprechenden Recheneinheit, insbesondere in einer Einrichtung nach einem der Ansprüche 9 bis 11, ausgeführt wird.

## Claims

1. Method for assessing measured values (102) which are acquired by a sensor, a scatter of the measured values (102) being taken into account in order to classify an interference situation, it being verified whether at least one object (2, 18, 36) to be detected by the sensor is, or is not, affected by interference, an increased scatter of the measured values (102) ensuing in the interference situations, threshold values being fixed for the assessment of a level of the scatter of the measured values (102).

2. Method according to Claim 1, in which the scatter of the measured values (102) is compared with an expected scatter.

3. Method according to either of Claims 1 and 2, in which a measured value association probability is used as interference classifier, said measured value association probability being calculated for at least each measurement cycle.

4. Method according to one of the preceding claims, in which it is checked whether the measured values (102) are reliable.

5. Method according to one of the preceding claims for classifying an interference situation for at least one object (2, 18, 36), in which signals from the at least one object (2, 18, 36) are received by the sensor.

6. Method according to Claim 5, in which it is checked whether at least two objects (2, 18, 36) are detected separately.

7. Method according to either of Claims 5 and 6, which is carried out for at least two objects (2, 18, 36) which are at the same distance from the sensor.

8. Method according to one of the preceding claims which supports a safety function.

9. Device which has an arithmetic logic unit and is designed to carry out a method according to one of the preceding claims.

10. Device according to Claim 9, which has a lowpass filter.

11. Device according to either of Claims 9 and 10, which has at least one sensor.

12. Computer program with program code means for the purpose of carrying out all the steps of a method according to one of Claims 1 to 8 when the computer program is executed on a computer or an appropriate arithmetic logic unit, in particular in a device according to one of Claims 9 to 11.

13. Computer program product with program code means which are stored on a computer-readable data carrier for the purpose of carrying out all the steps of a method according to one of Claims 1 to 8 when the computer program is executed on a computer or an appropriate arithmetic logic unit, in particular in a device according to one of Claims 9 to 11.

## Revendications

1. Procédé d'évaluation de valeurs de mesure (102) qui sont détectés par un capteur, dans lequel il est vérifié si les valeurs de mesure (102) sont dispersées afin d'effectuer une classification d'une situation de brouillage, dans lequel il est vérifié si oui ou non au moins un objet (2, 18, 36) devant être détecté par le capteur est affecté par un brouillage, dans lequel, dans les situations de brouillage, il se produit une dispersion accrue des valeurs de mesure (102), dans lequel des valeurs de seuil sont établies pour évaluer un niveau de dispersion des valeurs de mesure (102).

2. Procédé selon la revendication 1, dans lequel la dispersion des valeurs de mesure (102) est comparée à une dispersion prévue.

3. Procédé selon la revendication 1 ou 2, dans lequel une probabilité d'association de valeurs de mesure est utilisée en tant que classificateur de brouillage, dans lequel ladite probabilité d'association de valeurs de mesure est calculée pour au moins chaque cycle de mesure.

4. Procédé selon l'une quelconque des revendications précédentes, dans lequel il est vérifié si les valeurs de mesure (102) sont fiables.

5. Procédé selon l'une quelconque des revendications précédentes, destiné à effectuer une classification d'une situation de brouillage pour au moins un objet (2, 18, 36), dans lequel des signaux provenant de l'au moins un objet (2, 18, 36) sont reçus en provenance du capteur.

6. Procédé selon la revendication 5, dans lequel il est vérifié si au moins deux objets (2, 18, 36) sont détectés de manière séparée.

7. Procédé selon l'une quelconque des revendications 5 ou 6, qui est mis en oeuvre pour au moins deux objets (2, 18, 36) qui sont espacés d'une même distance du capteur.

8. Procédé selon l'une quelconque des revendications précédentes, au moyen duquel une fonction de sécurité est prise en charge.

9. Dispositif comprenant une unité de calcul et destiné à mettre en oeuvre un procédé selon l'une quelconque des revendications précédentes.

10. Dispositif selon la revendication 9, comprenant un filtre passe-bas.

11. Dispositif selon la revendication 9 ou 10, comprenant au moins un capteur.

12. Programme informatique comportant des moyens à code de programme destinés à mettre en oeuvre toutes les étapes d'un procédé selon l'une quelconque des revendications 1 à 8 lorsque le programme informatique est exécuté sur un ordinateur ou une unité de calcul correspondante, notamment sur un dispositif selon l'une quelconque des revendications 9 à 11.

13. Produit de programme informatique comportant des moyens à code de programme qui sont stockés sur un support de données lisible par ordinateur, destiné à mettre en oeuvre toutes les étapes d'un procédé selon l'une quelconque des revendications 1 à 8 lorsque le programme informatique est exécuté sur un ordinateur ou une unité de calcul correspondante, notamment sur un dispositif selon l'une quelconque des revendications 9 à 11.
